(19) Europäisches Patentamt
European Patent Office
Office européen des brevets

(11) **EP 2 103 056 B1**

(12) **FASCICULE DE BREVET EUROPEEN**

(45) Date de publication et mention de la délivrance du brevet:
**09.11.2016 Bulletin 2016/45**

(21) Numéro de dépôt: **07858042.0**

(22) Date de dépôt: **21.12.2007**

(51) Int Cl.:
***H04W 28/26*** *(2009.01)*

(86) Numéro de dépôt international:
**PCT/EP2007/064427**

(87) Numéro de publication internationale:
**WO 2008/077928 (03.07.2008 Gazette 2008/27)**

(54) **PROCEDE DE RESERVATION ET D'ALLOCATION DYNAMIQUE DE CRENEAUX TEMPORELS DANS UN RESEAU AVEC GARANTIE DE SERVICE**

VERFAHREN ZUR DYNAMISCHEN RESERVIERUNG UND ZUWEISUNG VON ZEITFENSTERN IN EINEM NETZ MIT DIENSTGARANTIE

METHOD FOR THE DYNAMIC RESERVATION AND ALLOCATION OF TIME SLOTS IN A NETWORK WITH SERVICE WARRANTY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611279**

(43) Date de publication de la demande:
**23.09.2009 Bulletin 2009/39**

(73) Titulaire: **THALES**
**92400 Courbevoie (FR)**

(72) Inventeurs:
• **CERASA, Antonio**
  **F-94117 Arcueil (FR)**
• **MAZZOCHETTI, Domenico**
  **F-94117 Arcueil (FR)**
• **SCHILLACI, Sebastiano**
  **F-94117 Arcueil (FR)**

• **HEURGUIER, Dominnique**
  **F-94170 Le Perreux Sur Marne (FR)**
• **THEBAULT, Didier**
  **F-95220 Herblay (FR)**
• **BAVANT, Marc**
  **F-75019 Paris (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2004/102989     US-A1- 2002 093 983**
**US-A1- 2002 196 808     US-A1- 2004 228 353**
**US-A1- 2006 268 908**

**Description**

L'invention concerne les réseaux radio ad hoc à accès temporel multiple ou TDMA (Time Division Multiple Access). Elle vise, plus particulièrement, l'allocation des slots entre les différents noeuds du réseau et la capacité de réservation de ressources incluant les contraintes de débit et de latence bout-en-bout.

Elle s'applique, aussi, dans des systèmes multi-canaux TDMA (par exemple à accès temporel et fréquentiel multiple, T/FDMA pour Time and Frequency Division Multiple Access), les réseaux radio utilisant une modulation OFDMA (Orthogonal Frequency Division Multiple Access) et tout autre système, qui utilise des créneaux temporels et un schéma d'allocation dynamique à la place d'un schéma d'allocation fixe.

Les réseaux radio TDMA utilisent généralement des allocations statiques. L'allocation est, soit totalement fixée (trame cyclique avec un slot par noeud), soit définie à l'avance pour une configuration.

Les nouveaux systèmes radio commencent à prendre en compte la qualité de service, mais cette prise en compte ne permet pas encore de supporter la réservation globale de ressources avec garantie de service de bout-en-bout (en débit et latence), en particulier les protocoles de garantie de service sur IP (Internet Protocol), tel que le protocole de réservation de ressources RSVP abréviation anglo-saxonne de Reservation Protocol.

Un autre inconvénient de l'art antérieur est son incapacité à éviter la saturation des noeuds fortement sollicités, même si les autres noeuds du réseau possèdent des ressources non utilisées et disponibles.

En ce qui concerne l'allocation de ressources, les systèmes de radio actuels TDMA ne supportent pas la réservation de ressources et le réseau ne peut garantir à la fois, un débit minimal et une latence maximale bout-en-bout.

La demande de brevet US 2004/228353 décrit un procédé permettant d'optimiser le choix des ressources allouées au regard du critère de facturation retenu par un opérateur dans un réseau de type GPRS. Le procédé met en oeuvre un processus de réservation global RSVP dans lequel, un message de réservation émis utilise au moins un des deux paramètres suivants : le débit maximum requis pour accéder au milieu radio, le débit minimal requis afin de satisfaire la garantie de service.

La demande de brevet US 2002/093983 divulgue un procédé d'allocation de ressources différenciées selon le type de flux dans un réseau sans fil. La demande de brevet WO 2004/102989 décrit un procédé de Router-on-Chip qui optimise le nombre de slots dans un TDM pour limiter les besoins en mémoire.

La demande de brevet US 2002/196808 divulgue un procédé de signalisation d'appel implémentable en matériel ou hardware mais ne décrit pas de procédé de ressources.

La demande de brevet US 2006/268908 décrit un procédé dans lequel une table de visibilité à deux voisins est utilisée dans un contexte d'allocation.

L'invention concerne un procédé de niveau contrôle d'accès au milieu MAC (en anglo-saxon medium access control) permettant l'allocation dynamique des slots de ressource avec une garantie de service. Deux types de trafic sont distingués : le trafic élastique et le trafic de session. Le trafic de session correspond à des flux multimédia continus (voix et vidéo) et des flux de données temps-réel pour lesquels on désire une garantie de service forte (débit et latence).

L'invention permet, d'une part, de recevoir et de traiter des requêtes de réservation de ressource pour des flux de session provenant des couches supérieures (couche IP typiquement). Ces requêtes de réservation incluent les contraintes de débit minimal, mais aussi de délai maximum de transmission d'un paquet (sur un saut). Elles sont typiquement élaborées par un processus de réservation global, tel que le protocole RSVP sur IP, permettant de décliner des contraintes globales de débit minimal garanti et de latence maximale de bout en bout en contraintes locales de débit pour des caractéristiques connues de flux applicatif, associées à un délai maximum de transmission d'un paquet, au niveau de chacun des noeuds du chemin.

L'invention concerne un procédé de réservation de ressource avec garantie de service en débit et délai pour N noeuds d'un réseau radio, chaque noeud comportant un processeur et des moyens radio émetteur/récepteur adaptés à émettre vers d'autres noeuds radio et à recevoir des messages provenant d'autres noeuds radio, le réseau radio utilisant des créneaux temporels pour émettre et transmettre des données, chacun des noeuds du réseau radio exécutant au moins les étapes suivantes :

- Mémoriser l'information relative à des noeuds voisins qui sont placés à un ou deux sauts, l'information comprenant l'allocation des slots des noeuds voisins,
- Recevoir une requête de réservation de ressource au niveau d'une couche de contrôle d'accès MAC du réseau radio, la requête de réservation de ressources indiquant au moins un délai maximum requis pour accéder au milieu radio correspondant à un délai maximum entre deux slots alloués à une même session pour satisfaire la garantie de latence et la garantie de débit, et un débit minimum correspondant au nombre minimum de slots requis pour satisfaire la garantie de débit,
- Calculer un nombre total minimum de slots requis pour une session en fonction de la contrainte de débit imposée par la requête de réservation de ressources,
- Calculer un délai maximum entre deux slots consécutifs alloués à une même session en fonction des contraintes de latence et de débit imposées par la requête de réservation de ressources,

- Calculer les identifiants des slots dans une trame qui satisfont à la requête de réservation de ressources,
- Si les slots identifiés comprennent des slots non alloués au noeud, alors transmettre un message de requête d'allocation de slot SAR afin de négocier l'allocation des slots identifiés à utiliser, caractérisé en ce que
- Les slots négociés comprennent l'utilisation d'un message SAR pour initier une requête d'allocation de slot, un message de confirmation d'allocation de slot SAC pour accuser réception d'un message SAR reçu d'un noeud voisin, un message de déallocation d'un slot pour initier une requête de déallocation de slots alloués précédemment, et un message de confirmation de déallocation d'un slot SDC accusant réception d'un message reçu d'un noeud voisin, et en en ce que le procédé comporte :
- En réponse à la réception d'un message SAC répondant à un message SAR la mise à jour de l'allocation de slots dans l'information mémorisée en accord avec les slots identifiés pour la requête de réservation de ressource,
- En réponse à un message SAR émis par le noeud, la transmission d'un message correspondant SAC et la mise à jour de l'allocation des slots dans l'information mémorisée en accord avec le message SAR reçu,
- En réponse à un message SAC reçu ne répondant pas à un message SAR, la mise à jour de l'allocation de slots dans l'information mémorisée en fonction des slots indiqués dans le message SAC reçu,
- En réponse à un message SDR, la transmission d'un message correspondant et la mise à jour de l'allocation des slots dans l'information mémorisée en fonction du message reçu SDR,
- En réponse à un message SDC ne répondant pas à un message transmis SDR, la mise à jour de l'allocation des slots mémorisés dans l'information mémorisée en fonction des slots indiqués dans le message reçu SDC.

Le procédé peut comporter au moins les étapes suivantes, la mise en commun de K slots temporels de chacun des N trames dans une réserve de slots de session, N étant le nombre de noeuds dans le réseau radio, l'information mémorisée concernant au moins une partie de la réserve des slots de session.

Chaque noeud comprend, par exemple, un dispositif de mécanisme d'allocation de ressource DRAM contenant une table configurée pour stocker :

- Un identifiant des types de slots formant une trame de base,
- Un numéro ID identifiant un slot,
- Un statut de chaque noeud du réseau, et
- Une table de visibilité mémorisant un identifiant des noeuds voisins en visibilité radio et un identifiant des noeuds accessibles en deux sauts.

Selon une variante de réalisation, l'ensemble des slots de sessions non réservés, à la connaissance du noeud considéré, forme un pool de ressource de slots libres dans lequel le noeud puise en cas de besoin de ressource pour satisfaire une requête de réservation.

Le procédé peut comporter une étape de réservation de slots comprenant les étapes suivantes :

o déterminer les slots de session nécessaires pour démarrer une session pour satisfaire une requête de réservation de ressources, en tenant compte du débit requis pour un service, du délai maximum pour accéder au milieu radio et de la taille des paquets maximum,

o consulter la table DRAM et la table de visibilité pour déterminer les identifiants des slots de session pour l'allocation de la session,

o implémenter un algorithme prédéterminé pour sélectionner des slots appartenant au pool de slots de session libres pour la requête en réservation de ressource.

Selon une autre variante de réalisation, le procédé comporte une étape de négociation d'une configuration de réservation avec les noeuds voisins comprenant les étapes suivantes :

o choisir un ensemble de slots dans le pool de slots libres de session mis en commun,

o transmettre un message SAR vers les autres noeuds voisins,

o générer une table contenant les voisins à deux sauts, et un champ statut renseigné en fonction du message SAC diffusés par ses noeuds voisins en réponse au message transmis SAR,

o initialiser un compteur temporel pour déterminer si un message SAC a été perdu.

Le procédé peut mettre en oeuvre un mécanisme local de préemption en fonction de la priorité allouée à une session.

Le procédé peut comporter une étape de transmission de messages SDR et de messages SDC s'il y a compétition pour des slots de session compris dans un message SAR.

Selon une variante de réalisation, le procédé comporte une étape préalable d'entrelacement des slots de chacun des noeuds N du réseau.

Il peut aussi comporter une étape de réutilisation spatiale des créneaux temporels en évitant les collisions.

La requête de réservation de ressource est par exemple initiée selon un protocole de réservation RSVP.

Le procédé et le système selon l'invention offrent notamment les avantages suivants :

◦ Mettre en commun des ressources libres appartenant à plusieurs noeuds, afin d'éviter la saturation d'un ou de plusieurs noeuds.

◦ Garantir une qualité de service au niveau noeud sur les flux de session en termes de débit, de délai de transmission et de gigue.

◦ Permettre de mettre en place des garanties de service applicatif (au niveau des couches supérieures) en terme de débit minimal et de valeur de latence maximum pour le bout-en-bout. Ceci est alors réalisé en mettant en oeuvre un mécanisme global de réservation (tel que le protocole standard RSVP sur IP).

◦ L'optimisation des ressources globales d'un réseau radio TDMA (l'allocation dynamique permet, par exemple, au niveau du routage de privilégier les chemins à nombre minimal de bonds).

◦ La réutilisation spatiale des slots de façon à augmenter la capacité globale du réseau et introduire le passage à l'échelle en fonction du nombre de noeuds du réseau (scalabilité).

◦ A disposer d'une connaissance sur l'utilisation des ressources au niveau de la couche MAC.

D'autres caractéristiques et avantages de la présente invention apparaîtront mieux à la lecture de la description qui suit et d'un exemple donné à titre illustratif et nullement limitatif, annexé des figures qui représentent :

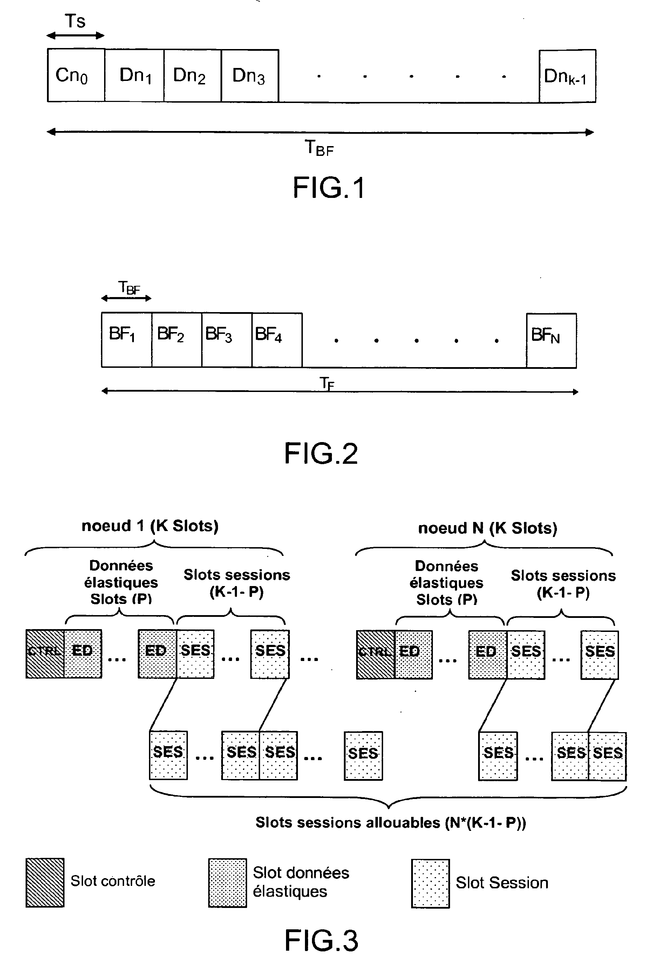

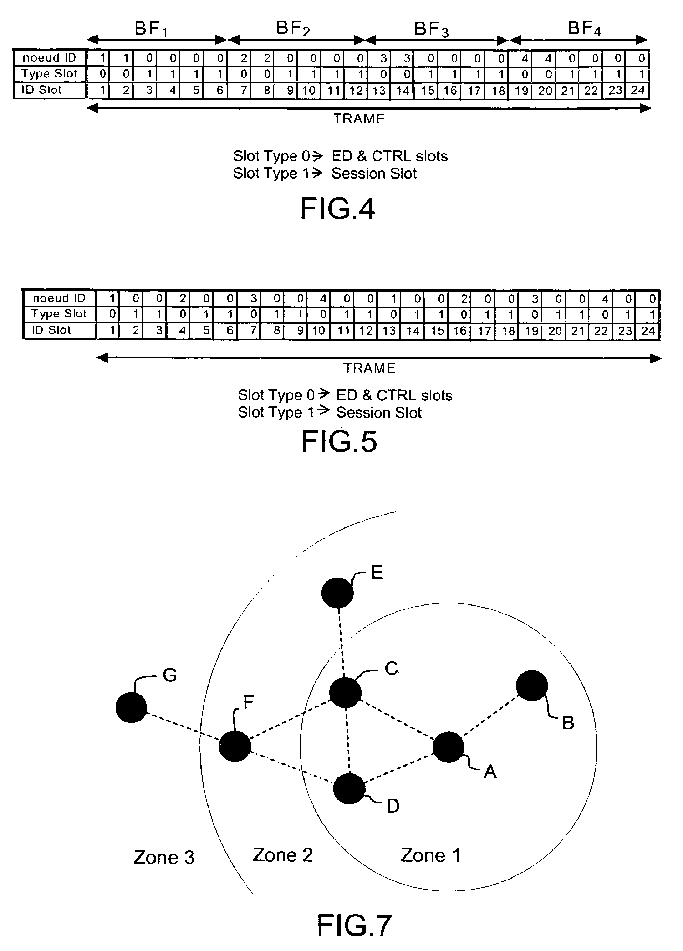

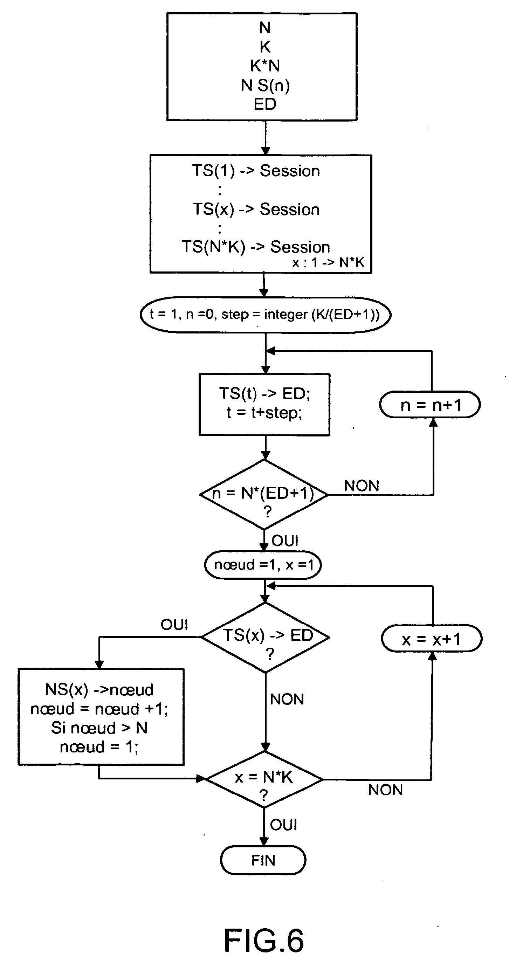

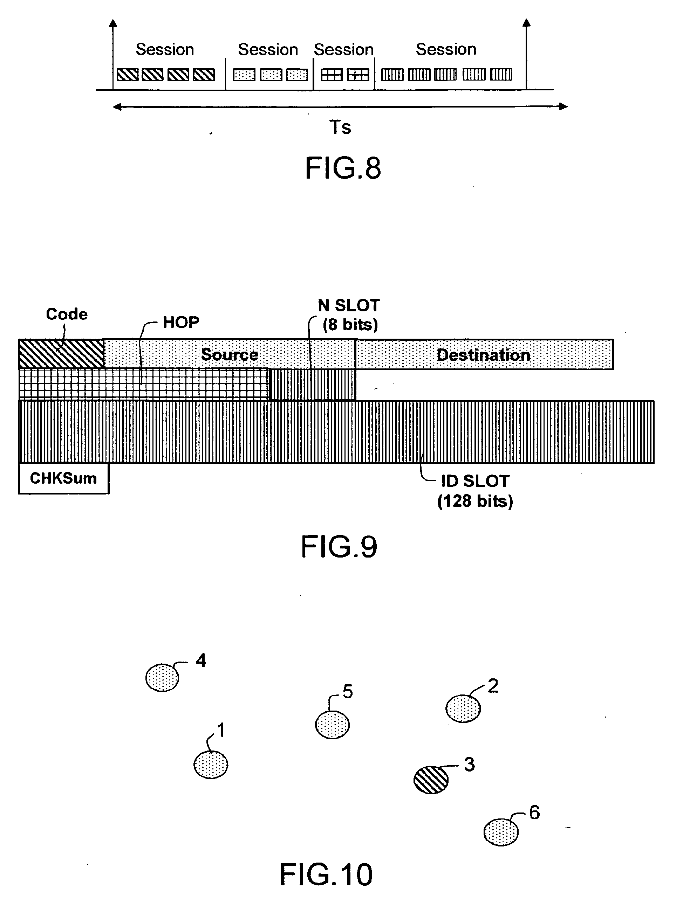

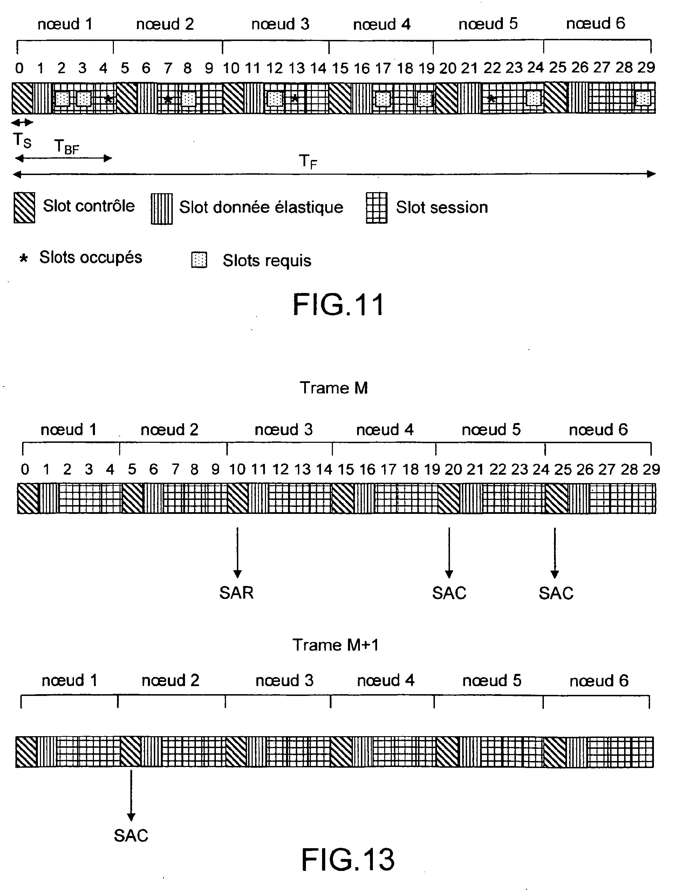

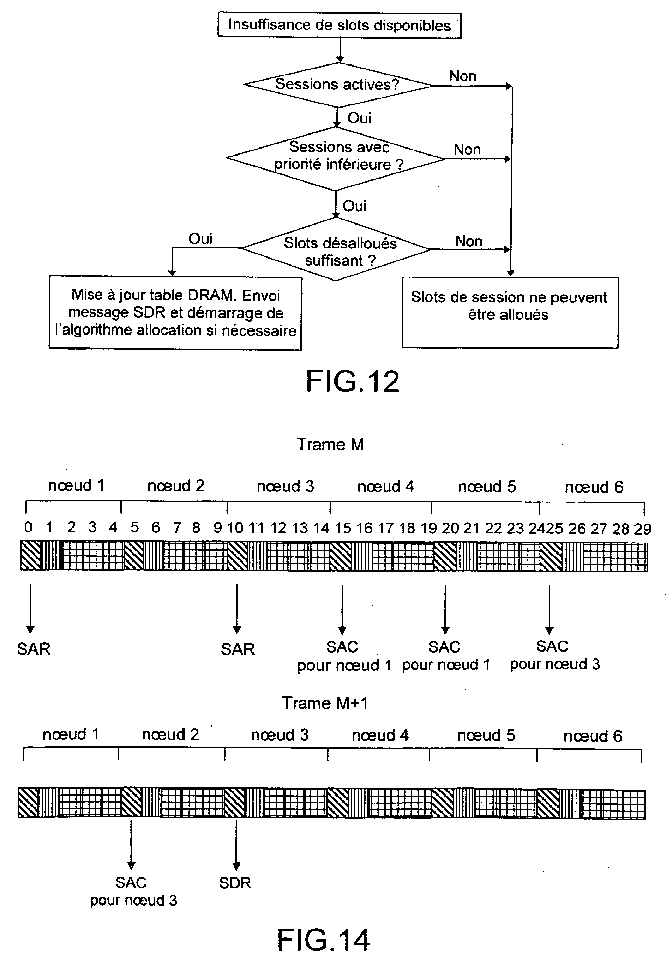

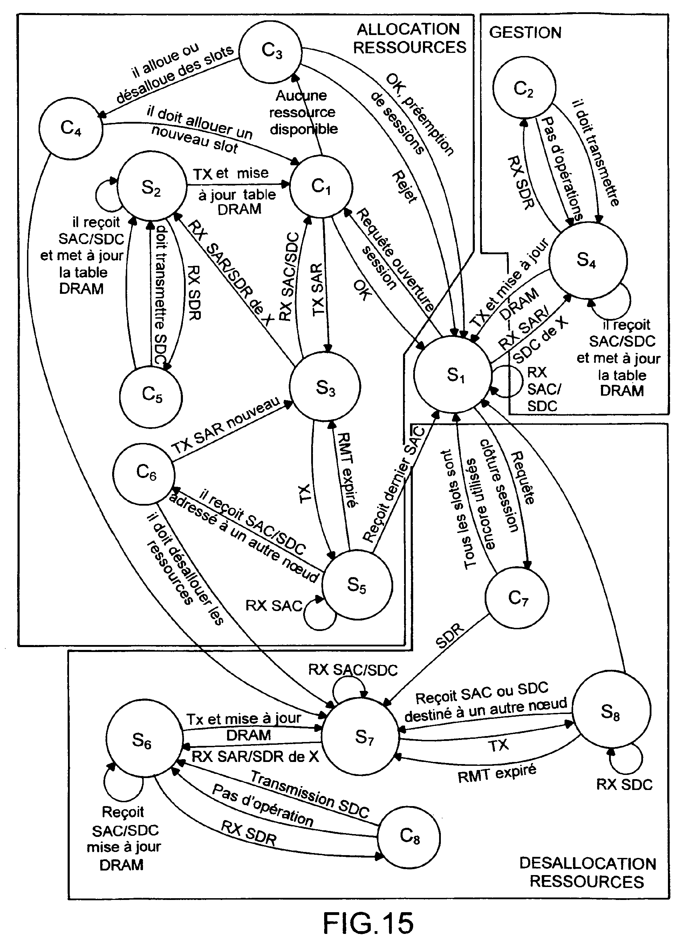

o La figure 1, un exemple de trame de base relative à un noeud n,
o La figure 2, une structure de trame,
o La figure 3, une structure de trame en terme d'allocation de slots,
o La figure 4, un exemple de trame non entrelacée,
o La figure 5, un exemple de trame entrelacée,
o La figure 6, un exemple d'algorithme d'entrelacement,
o La figure 7, une représentation des horizons à 1 bond (zone 1), 2 bonds (zone 2) et supérieur à 2 bonds (zone 3) pour un noeud donné (noeud A dans l'exemple),
o La figure 8, un exemple de répartitions de paquets appartenant à différentes sessions au sein d'un slot de session,
o La figure 9 une structure de paquet MAC,
o La figure 10, un exemple de réseau composé de 6 noeuds,
o La Figure 11 un exemple de configuration de réservation pour le réseau de la figure 10,
o La figure 12, un diagramme bloc d'un mécanisme de pré-emption,
o La figure 13, un exemple d'échange de messages pour la négociation d'une réservation: émissions de requête « SAR » par le noeud 3 et de messages de confirmation « SAC » par les noeuds voisins 2, 5 et 6,
o La figure 14, un exemple d'émission de deux requêtes simultanées « SAR » dans une même trame par les noeuds 1 et 3, d'émission de messages de confirmation « SAC » par les noeuds voisins 4 et 5 pour le noeud 1, par les noeuds 6 et 2 pour le noeud 3, suivi d'une requête de déallocation du noeud 3.
o La figure 15, un automate à état finis décrivant l'ensemble des états du processus de négociation de slot.

Afin de mieux faire comprendre le principe mis en oeuvre dans le procédé selon l'invention, la description est donnée à titre illustratif et nullement limitatif, pour un réseau radio ad hoc TDMA dans lequel tous les noeuds sont autonomes et jouent un même rôle. Pour cela, ils sont équipés chacun d'un processeur adapté à mettre en oeuvre les étapes du procédé selon l'invention. Ils sont aussi pourvus de moyen radio, émetteur et récepteur, permettant de transmettre et de recevoir les messages transmis vers d'autres noeuds ou en provenance de ces autres noeuds. Chaque noeud comprend, comme il est détaillé ci-après, plusieurs tables : une table DRAM contenant l'information relative aux noeuds, une table de visibilité des autres noeuds, une table de statut, une table créneau temporel ou slot, etc.. Quelques rappels et définitions sont donnés en préambule à l'exposé du procédé et du système selon l'invention.

**Terminologie**

L'architecture d'une trame radio est composée de quatre éléments en couche dans lesquels vont être véhiculées les données utiles:

o Unité de données (utiles) : paquet de l'application (paquet IP par exemple),
o Ressource MAC élémentaire : paquet MAC (paquet d'encapsulation au niveau MAC d'un paquet d'application),
o Créneau temporel : slot,

o Trame de base : BF,
o Trame : F.

**Paquet MAC**

Le paquet MAC est une structure de donnée élémentaire au niveau MAC. NPS est le nombre de paquets MAC qu'un noeud peut transmettre dans un créneau temporel (slot).

**Créneau temporel « slot » et trame de base**

La trame de base et les « slots » sont illustrés sur la figure 1

Cn : slot de contrôle pour le noeud n
Dn : slot attribué au noeud n
Ts : durée du slot
K : nombre de slots composant la trame de base
$T_{BF}$ : durée de la trame de base avec $T_{BF}=K*Ts$

Chaque trame de base est relative à un noeud spécifique. L'exemple illustré à la figure 1 montre la trame de base du noeud n. Chaque trame de base contient K slots. Le premier slot $Cn_0$ dans chaque trame de base est appelé « slot de contrôle » C'est un « slot fixe »alloué de façon permanente au noeud n. Le noeud n utilise ce slot pour transmettre la signalisation de niveau MAC (paquets de signalisation nécessaires au fonctionnement des services du niveau MAC tels que la découverte de voisins et la synchronisation trame).
Le slot « Dni (où i = 1....K-1) représente un des K-1 slots attribués, a priori, au noeud n. Ce noeud n peut utiliser ce slot pour transmettre ses propres données ou peut prêter ce slot à un autre noeud, en mettant en oeuvre les étapes du procédé selon l'invention. Cela signifie que, en relation avec la figure 1, un noeud m peut requérir et obtenir du noeud n la permission de transmettre sur le slot Dni.
Les slots, peuvent être divisés en deux classes :

o Les slots « élastiques » utilisés pour transmettre les données élastiques : en général, un sous-ensemble p de Dni (où i = 1...K-1) slots sont alloués statistiquement à un noeud afin de transmettre des données élastiques. Ainsi, Dnj, (où j= 1...p) slots sont réservés pour la transmission de données élastiques.
∘ Les slots de « session » utilisés pour transmettre des paquets de session. Ces slots peuvent supporter des données élastiques. Si l'on décompte le slot de contrôle et les slots élastiques, les K-1-p slots restants constituent des slots de session qui sont allouables dynamiquement, de façon à transmettre les paquets de session. Les slots de session attribués, mais non utilisés par le noeud auquel ils sont attribués, peuvent être regroupés dans un ensemble ou pool et partagés entre tous les noeuds du réseau.

**Trame**

Chaque noeud a la responsabilité de gérer sa propre trame de base (à l'initialisation du procédé, la trame de base définit notamment les slots attribués). La séquence des trames de base pour l'ensemble des noeuds du réseau compose la trame. Si le réseau est formé de N noeuds, la structure de trame est, par exemple, celle qui est représentée à la figure 2.
$BF_n$ correspond à la trame de base gérée par le noeud n; K le nombre de slots composant une trame basique ; $T_F$ la durée de la trame, avec $T_F =N*T_{BF}=N*K*Ts$.
La période d'une trame dépend des paramètres K nombre de slots composant une trame de base, et N, le nombre de noeuds composant le réseau.

**Gestion des slots et requête de réservation de ressource**

La figure 3 représente un exemple de structure d'une trame et sa composition. Chaque trame de base est composée de K slots. Ainsi, si le nombre total de noeud est N, le nombre total de slots composant la trame est N*K. A l'intérieur de chaque trame de base, un slot de contrôle CTRL ou $Cn_0$ est réservé pour la signalisation de niveau MAC et P slots sont utilisés pour transmettre les données élastiques ED. Les slots restants, K-1-P, sont utilisés pour transmettre les paquets de session SES, ces derniers sont mis en commun (en pool) pour être partagés entre tous les noeuds du réseau. Pour les N noeuds cela correspond à (N*(K-1-P)) slots de session.
Chaque noeud peut potentiellement utiliser tout slot de session du pool, alors que le slot de contrôle et les slots élastiques sont définitivement alloués à un noeud.

En présence d'une nouvelle session, la couche MAC reçoit une requête de réservation de ressource assortie d'une contrainte de débit minimal et d'une contrainte de délai d'accès radio maximal.

Chaque slot est caractérisé par un débit élémentaire associé. Un noeud n peut ainsi évaluer le nombre de slots dont il a besoin pour satisfaire la requête de réservation en terme de débit en se basant sur le débit élémentaire offert par un slot.

En relation avec les besoins des applications, la couche supérieure peut requérir une augmentation ou une diminution de l'occupation de la couche MAC par l'intermédiaire de requêtes de réservation de ressource. C'est la couche MAC qui réalise l'allocation effective des ressources correspondant à une requête de réservation de ressource pour une session. Cette couche MAC décide combien de slots de sessions sont nécessaires pour satisfaire la requête de réservation de ressource et démarre des procédures propres pour établir quels slots dans la trame seront utilisés, et plus particulièrement quels paquets MAC sont réservés.

### Procédé d'entrelacement

De façon à rendre le temps d'accès radio homogène et minimal pour tous les noeuds, il est possible d'entrelacer les slots. Un algorithme d'entrelacement propre est utilisé par chacun des noeuds pour définir la séquence temps réel des slots.

La figure 4 schématise une trame non entrelacée, avec K = 6 et N=4. La position des slots est distribuée régulièrement selon les noeuds.

La figure 5 schématise un exemple de trame pour laquelle il y a entrelacement.

La figure 6 illustre un exemple d'algorithme d'entrelacement est le suivant : si la position (k*N) est occupée, k étant l'indice du slots, le slot (k*N)+1 sera utilisé et ainsi de suite.

### Allocation des slots de session

Sur une demande de réservation de ressources pour une nouvelle session, un algorithme d'allocation de ressource élabore une configuration de réservation de slots sessions, et plus particulièrement de paquets MAC (appartenant aux slots de session).

Plusieurs contraintes sont prises en compte au niveau de cet algorithme:

    o Les ressources allouées doivent être compatibles avec les exigences de débit minimal spécifiées dans la requête de réservation,

    o Le délai d'accès radio maximal doit être compatible avec le délai maximum imposé dans la requête de réservation.

De plus, le procédé selon l'invention, peut implémenter un algorithme d'optimisation qui permet d'augmenter la capacité de transmission d'un noeud en utilisant des concepts de réutilisation de ressources, réutilisation spatiale de slots.

La figure 7 représente la décomposition de l'horizon pour chacun des noeuds en plusieurs zones. Par exemple, pour le noeud A, on divise le réseau en trois zones définies de la manière suivante :

    o « Zone 3 », elle inclut tous les noeuds qui sont éloignés d'au moins trois sauts de A,

    ◦ « Zone 2 », zone qui inclut tous les noeuds qui sont éloignés de 2 sauts de A,

    o « Zone 1 », inclut tous les noeuds qui sont éloignés d'un saut (voisins directs) de A.

Si le noeud A (zone 1) et un noeud de la zone 3, par exemple le noeud G (zone 3), transmettent des paquets dans le même slot, il n'y a pas collision sur ce slot, puisque les destinataires du noeud A pour ce slot ne sont pas en portée des autres noeuds de la zone 3, tel que G, qui utilisent ce slot. Pour la même raison, le noeud A et un autre noeud situé dans la zone 3 peuvent réutiliser le même slot.

A l'inverse, si le noeud A (zone 1) et le noeud F (zone 2) utilisent le même slot, le noeud C et le noeud D ne peuvent pas recevoir l'ensemble des paquets transmis dans ce slot en raison de la collision.

En résumé, les noeuds éloignés de moins de 2 sauts ne peuvent pas utiliser un même slot, mais à l'inverse, un slot peut être réutilisé spatialement au-delà de 3 sauts. Sur cette base, le procédé va élaborer au niveau de chaque noeud, une connaissance de l'allocation des slots sur un horizon de deux noeuds, ce qui permet, d'une part, de négocier le prêt de slot localement et, d'autre part, de réutiliser spatialement les slots.

Chaque noeud stocke ainsi sa connaissance des slots utilisés par les noeuds qui sont éloignés d'un ou de deux sauts dans une table DRAM.

De façon à éviter au maximum les conflits de réservation, avant d'utiliser des slots gérés par d'autres noeuds, un noeud doit vérifier sa table DRAM et propager son contenu à tous les noeuds qui sont éloignés d'un saut et de deux sauts. Cette information est envoyée par l'intermédiaire de messages dédiés.

**Table DRAM**

Le mécanisme d'allocation de ressources dynamique, est basé sur un échange d'informations effectué grâce aux paquets de contrôle MAC véhiculés dans les slots de contrôle CTRL. Pour cela, une table DRAM mémorise :

   o trois types de slots: 0 : slot session ; 1 : slot control ; 2 : slot données élastiques ;
   o ID slot : le numéro de slot dans la trame dans l'intervalle 0 à N*K-1 ;
   o statut : ce champ est composé de 24 bits. Les 20 bits les moins significatifs sont relatifs aux 20 noeuds du réseau. Si le $p^{\text{ième}}$ bit (en partant de la droite) est mis à 1, cela signifie que le noeud p utilise le slot considéré.

Dans la table DRAM d'un noeud, seule l'information relative aux noeuds qui sont situés à un ou deux sauts est mémorisée. Pour les autres noeuds éloignés de plus de deux sauts, le noeud n'a pas de visibilité. Tous les noeuds du réseau construisent leur propre table de la même façon.

| Type de | 0 | 0 | ... | 0 |
|---|---|---|---|---|
| SLOT ID | 0 | 1 | ... | N*K - 1 |
| STATUT | 00001000001000001 | 00000000010001000 | ... | 00000000000000000 |

| nœuds 3, 10 et 16 utilisent le slot 0 dans la trame. | Noeuds 7 et 11 utilisent le slot 1 dans la trame. | Aucun nœud n'utilise de slot (N*k −1) dans la |
|---|---|---|

**Table de visibilité**

Un noeud possède aussi une table de visibilité composée de deux colonnes. La première colonne correspond aux noeuds qui sont situés à un saut du noeud, elle contient le ID ou identificateur des noeuds situés à un saut. La deuxième colonne contient les identificateurs ID des noeuds situés à deux sauts, qui peuvent être atteints par l'intermédiaire du noeud qui est stocké dans la première colonne et la même rangée.

Se basant sur sa table de visibilité, et sur N, le nombre maximum de noeuds dans le réseau, chaque noeud peut construire une autre table, la table des noeuds éloignés, qui contient tous les identifiants ID des noeuds qui sont éloignés de plus de deux sauts. Cette table des noeuds éloignés est utilisée, notamment, pour rechercher les identificateurs ID des noeuds dont les ressources peuvent être réutilisées. La table de visibilité et la table de noeuds éloignés sont construites en envoyant des messages « Hello » (contenant l'identité du noeud émetteur) dans les slots de contrôles.

| Un saut | Deux sauts |
|---|---|
| ID du noeuds | ID du noeud |

**Table du statut**

La table des statuts contient deux champs « prochain saut » qui contient les ID des noeuds et « statut » qui contient vrai ou faux. Le statut peut être vrai, si un message de confirmation d'allocation de slot est reçu ou bien faux autrement.

| Prochain saut | statut |
|---|---|
| Noeud ID | **Vrai ou faux** |

**Table des slots**

Une autre table utile est la table des slots,

| ID du slot | Nombre de sessions | Nombre de paquets pour la session 0 | ID de la session 0 | ... | Nombre de paquets pour la session N-1 | ID de session N-1 |
|---|---|---|---|---|---|---|
| | | | | ... | | |

Son contenu est le suivant :

o ID slot ; ce champ contient le ID d'un slot,
o Nombre de sessions : cette valeur représente le nombre total de sessions transmis à l'intérieur du slot,
o Nombre de paquets pour la session K: ce champ contient le nombre de paquets MAC réservés pour la $k^{\text{ième}}$ session dans le slot.

La figure 8 schématise un cas où il y a plusieurs paquets MAC appartenant à différentes sessions dans un slot simple de durée Ts ; IDses de la session K : cette valeur représente l'identifiant (le IDses) correspondant à la session. Les sessions sont différenciées sur la figure par des hachures.

**Table des requêtes de réservation en cours de traitement**

Lorsqu'une requête pour une nouvelle session est émise par les couches supérieures, la session IDses et le niveau de priorité sont, par exemple, mémorisés dans une table spéciale dont le contenu est le suivant :

◦ Session IDses : l'identifiant IDses de la nouvelle session,
o Priorité : le niveau de priorité de la session est mémorisé dans ce champ,
◦ Statut : ce champ est positionné à 1 si la requête est en cours de traitement et O si la requête a été traitée. Une requête en cours de traitement est une requête pour laquelle le processus d'allocation a commencé mais les slots n'ont pas encore été réservés.

| Session IDses | priorité | statut |
|---|---|---|
| | | |

Une requête peut être en cours de traitement pour les raisons suivantes :

- Le noeud n'a pas encore reçu toutes les réponses SAC des noeuds proches voisins,
- Le noeud a reçu une réponse qui ne lui est pas destinée et ainsi il doit désallouer des ressources.

Si plusieurs requêtes arrivent, elles sont stockées dans la table et sont traitées les unes après les autres. Lorsque le noeud doit choisir la requête à servir, la session ayant la priorité la plus élevée est servie en premier.

**Types de paquets**

Tous les paquets MAC ont la structure schématisée à la figure 9, contenant les champs suivant :

o Code : ce champ indique le type de paquets,
o Champ Source : contient l'adresse source du noeud émetteur,
o Champ Destination : contient l'adresse destination du noeud destinataire ;
o Champ HOP : contient le nombre de sauts,
o Champ N slot : contient le nombre de slots IDs écrit dans le ID slot champ,
o Champs ID slot : contiennent les IDs des slots,

**Procédure de négociation des slots**

Il y a, par exemple, quatre types de messages utilisés dans la procédure de négociation des slots

o requête allocation de slots ou SAR (slot allocation request) : ce message est transmis par un noeud lorsqu'il souhaite faire une requête d'allocation de slot,
o confirmation d'allocation de slot ou SAC (Slot allocation confirmation) : ce message est envoyé par un noeud lorsqu'il souhaite confirmer une allocation possible de slot. Les slots confirmés sont écrits dans le champ slot ID,
o requête de désallocation de slot ou SDR (slot deallocation request) : ce message est émis par un noeud lorsqu'il souhaite faire une requête de désallocation pour les slots alloués précédemment. Ces slots sont écrits dans le champ ID slot.
∘ confirmation de désallocation de slot ou SDC (slot deallocation confirmation) : ce message est envoyé par un noeud lorsqu'il souhaite faire une confirmation de désallocation. Les slots auxquels le message est destiné sont mémorisés dans le champ slot ID.

**Procédé d'allocation dynamique**

Le procédé d'allocation dynamique selon l'invention, peut être divisé, par exemple, en trois principales étapes:

E1 - calcul du nombre total minimal de paquets MAC et de slots requis pour une session en fonction de la contrainte de débit minimal imposée par la requête de réservation;
E2 - calcul des identités (ID) des slots dans la trame pour satisfaire la requête de réservation. L'algorithme de sélection des slots de session doit respecter la contrainte de délai maximum d'accès radio imposée par la requête de réservation ainsi que le nombre minimal de paquets MAC réservés ;
E3 - négociation avec les voisins en cas d'empreint de nouveaux slots par l'intermédiaire d'un message de requête SAR.

**Détermination du nombre de slots requis**

Le calcul du nombre total de slots requis pour une session dépend des contraintes imposées dans la requête de réservation de ressource. Les paramètres d'entrée sont donnés dans la requête et sont utilisés pour déterminer les slots nécessaires :

o débit requis (RB) en bit/s ;
o délai maximum (MD) pour accéder au médium radio en ms ;
o taille maximum des paquets (PS) de données de l'application en bit ;

La déclinaison du procédé de réservation de la couche supérieure (comme typiquement RSVP sur IP) en terme de requête de réservation de ressource est détaillée plus loin.

Les autres paramètres, donnés comme des contraintes de système sont, par exemple :

o Le nombre N de noeuds dans le réseau ;
o Le nombre de slots K composant la trame basique ;
o Le débit (BR) du lien radio en bits/s ;
o la durée du slot (Ts) ;
o le nombre NPS de paquets MAC dans un slot ;
o le nombre de bits M utilisés pour encapsuler chaque paquet.

Le nombre maximum de bits qui peut être transmis dans un slot est donné par le produit du débit par la durée du slot

$$Bs = BR * Ts$$

On soustrait de Bs, le nombre de bits utilisés pour l'encapsulation d'un paquet de donnée de l'application. Ainsi, le nombre maximum de bits utiles pour l'encapsulation de données UBs est donné par :

$$UBs = Bs - M*NPS$$

Le nombre de slots nécessaires pour satisfaire seulement la contrainte de débit (« largeur de bande passante ») BWs est donné par :

$$BW_S = \frac{RB}{\dfrac{UB_S}{T_F}}$$

où $T_F$ est la durée de la trame donnée par :

$$T_F = N * K * T_S$$

le nombre total de slots dans une trame est donné par:

$$NSF = N * K$$

En prenant en compte la contrainte de délai MD, le nombre de slots $D_S$ nécessaire pour satisfaire cette exigence est:

$$D_S = \frac{T_F}{MD}$$

Une fois calculés $BW_S$ et $D_S$, le nombre de slots nécessaires $TN_S$ est donné par le maximum des deux paramètres:

$$TN_S = \max(BW_S, D_S)$$

Le procédé détermine ensuite, la distance maximum entre un premier slot session et le suivant ; cette valeur $MD_S$ est donnée par:

$$MD_S = \frac{NSF}{TN_s}$$

Cela signifie qu'il y a un slot session chaque $MD_S$ slots dans la trame. Si la taille maximum du paquet PS est plus grande que la valeur utile du bit $UB_S$, le nombre de slots consécutifs est :

$$CS = \frac{PS}{UB_S}$$

**Calcul d'une configuration de réservation, des identificateurs ID des slots et des paquets MAC à réserver avec mécanisme de préemption**

En partant de la valeur de la distance $MD_S$ (distance maximum entre deux slots) déterminée lors de l'étape précédente, et de la contrainte de débit minimal il faut déterminer les identifiants ID des slots à réserver. La sélection des slots de session et l'élaboration d'une configuration de réservation est réalisée à l'aide d'un algorithme d'allocation de ressource. Cet algorithme détermine une solution d'allocation qui respecte les contraintes suivantes :

- un espacement temporel, entre deux slots réservés successifs, inférieur à la distance MD$_S$ calculée lors de l'étape précédente,
- une utilisation prioritaire des slots déjà attribués au noeud,
- un espacement temporel des slots réservés aussi régulier que possible,
- un nombre de paquets MAC réservés (sur les slots empruntés et sur les slots propres) garantissant le débit minimal requis,
- en cas d'absence de solution, possibilité de préemption des slots propres réservés pour des sessions de moindre priorité.

Les paramètres d'entrée pour cette étape sont :

 o Le nombre de slots nécessaires pour la session;
 o Le nombre des slots consécutifs CS;
 o La valeur de la table DRAM ;
 o La valeur de la table de visibilité.

L'élaboration de la configuration de réservation au niveau d'un noeud repose sur un algorithme d'allocation de ressource intégrant les contraintes émises dans la requête de réservation. Une heuristique consiste, par exemple, à examiner chaque slot en commençant, à partir du premier slot libre dans la trame de base, puis en recherchant de proche en proche à sélectionner un slot de session qui satisfasse la contrainte de délai maximal d'accès radio. A la fin de ce processus de sélection, de nouveaux slots sont éventuellement réservés si la contrainte de débit minimal n'est pas respectée.

L'algorithme sait, en consultant une table DRAM associée au noeud considéré, si un slot de session est libre ou occupé, c'est à dire déjà totalement utilisé par le noeud considéré (et ne disposant plus de paquet MAC disponible) ou déjà réservé par un autre noeud qui est situé à un ou deux sauts du noeud lui-même.

Ainsi, dans l'heuristique décrite, les slots de sessions sont examinés chronologiquement dans la trame. Si le slot est libre, son identifiant ID est mis dans une liste de slot ID's et on passe au slot ID qui est éloigné d'une valeur MDs slots du slot courant. Si ce nouveau slot est libre son ID est mémorisé dans la liste précédente. Sinon, on retourne slot par slot jusqu'à trouver un slot session libre. L'heuristique continue à être déroulé jusqu'à atteindre la fin de la trame. A la fin le procédé dispose d'une liste de slots pouvant être utilisés pour la session.

Les figures 10, 11 illustrent un exemple d'élaboration de configuration de réservation de slot de session basée sur l'heuristique d'allocation précédemment décrite pour un réseau comportant 6 noeuds. On suppose dans cet exemple qu'il y a 6 noeuds dans le réseau et que chaque trame de base est composée de K=5 slots, un des slots étant utilisé pour transmettre des données élastiques (P=1). On considère le cas où le noeud 3 doit réserver des ressources pour une session de donnée.

Supposons que le débit minimal requis pour la session soit de 5kbits/s et que le délai maximum de transmission soit de 50 ms.

 o N = 6 nombre de noeuds dans le réseau
 o K = 5 nombre de slots dans chaque trame de base
 o P = 1 nombre de slots (pour les données) élastiques dans chaque trame de base
 o T$_S$ = 10 ms durée du slot
 o T$_F$ = 300 ms durée de la trame
 o BR = 1 Mbit/s débit du canal TDMA
 o NPS = 3; nombre de paquets dans un slot
 o M = 72 bits; en-tête pour encapsulation de paquets
 o RB = 5 kbit/s débit requis
 o MD = 50 ms délai maximum de transmission d'un paquet

Les bits utiles dans un slot et le nombre de slots, nécessaires pour satisfaire à la contrainte de largeur de bande, sont calculés comme exposé ci-après :

$$B_s = BR * T_s = 10^6 * 10^{-2} = 10^4 \, bits$$

$$UB_S = B_S - M * NPS = 10^3 - 72 * 3 = 9784 bits$$

$$BW_S = \frac{RB}{\dfrac{UB_S}{T_F}} = \frac{5*10^3}{\dfrac{9784}{300*10^{-3}}} = 0,15$$

La valeur BW$_S$, de nombre minimal de slots pour satisfaire la contrainte de débit, est approximée au premier entier le plus grand. Dans ce cas, la valeur BW$_S$ est égale à 1.

En ce qui concerne la contrainte du délai maximum, le nombre de slots nécessaires pour satisfaire cette demande, est donné par :

$$D_S = \frac{T_F}{MD} = \frac{300}{50} = 6$$

$TN_S$ = max($BW_S$,$D_S$) = 6

La distance maximum entre un slot session et le prochain est donnée par:

$$MD_S = \frac{NSF}{TN_s} = \frac{30}{6} = 5$$

Cela signifie que l'on a besoin d'un slot session tous les 5 slots dans la trame.

Supposons que les slots signés avec une étoile dans la figure 11 correspondent à des slots utilisés par des noeuds qui sont un ou deux slots éloignés du noeud 3 ou des slots déjà attribués au noeud 3 mais totalement occupés.

Pour calculer l'identifiant des slots disponibles IDs, le procédé démarre du slot 2, il contrôle s'il est libre. Si oui, il stocke cet identifiant ID(2) dans une liste. Ensuite, il saute 5 slots en avant et contrôle le statut du nouveau slot courant. Dans cet exemple, c'est le slot 7. En vérifiant dans la table DRAM (du noeud 3), il s'avère que ce slot est déjà occupé, donc on revient en arrière jusqu'à trouver un slot libre. Dans l'exemple, ce slot correspond au slot 3. En suivant ce principe, les slots disponibles sont 2, 3, 8, 12, 17, 19, 24 et 29.

Le dernier test à exécuter est de vérifier que la distance entre le dernier slot disponible (slot 29) et le premier slot disponible dans la trame suivante (slot 2) est inférieure à MDs. Dans l'exemple, le test est OK.

La procédure entière est répétée en commençant à partir du second slot libre dans la trame jusqu'à la fin de la trame, si nécessaire.

A la fin de cette procédure d'élaboration de configuration de réservation, si aucune solution n'a été trouvée, la couche MAC rejette la requête de réservation de ressource pour l'instauration de nouvelle session. D'autre part, si la solution trouvée ne sélectionne que des slots déjà attribués au noeud considéré, la requête est acceptée et les paquets MAC associés sont réservés. Dans le cas où la solution fait intervenir des slots non attribués au noeud considéré, on passé à l'étape d'émission d'une requête d'allocation SAR de négociation avec les noeuds voisins.

La figure 12 représente un diagramme bloc d'un mécanisme de préemption.

Un des paramètres d'entrée pour l'allocation de slot est son niveau de priorité. S'il existe assez de slots de session qui peuvent être alloués à une session, le niveau de priorité de la requête est vérifié. S'il y a une session ayant un niveau de priorité inférieure, le procédé examine si en désallouant tous les slots appartenant à cette session de faible priorité, s'il est possible de trouver une solution de configuration de réservation pour la nouvelle session de niveau de priorité plus élevé.

Ce mécanisme est appelé, mécanisme de préemption et assure que les services de priorité élevée peuvent être garantis localement éventuellement, en désallouant des slots appartenant à des sessions de niveau de priorité inférieur.

**Requête SAR pour l'allocation de slots**

De façon à expliquer le processus de requête pour l'allocation de slot, supposons que le noeud 3 a choisi le jeu de slots [2, 3, 8, 12, 17, 19, 24, 29] et veut émettre une requête pour l'allocation de slot. Cette information est transmise par un message SAR (Slot Allocation Request) vers les autres noeuds voisins du réseau.

Lorsqu'un noeud transmet un paquet SAR, il crée une table contenant ses noeuds proches voisins au sens « prochain saut » et un champ statut. Ce champ statut peut être renseigné à vrai ou à faux, dépendant de la réception de la confirmation d'allocation de slot correspondante envoyée par ses noeuds proches voisins (noeuds prochain saut). De plus, le noeud initialise un compteur temporel « timer » de façon à contrôler si un paquet SAC a été perdu. Généralement, le noeud attend une période entière de trame avant de renouveler la requête.

En se référant au noeud 3, sa table statut est :

| Prochain saut | Statut |
|---|---|
| Noeud 2 | Vrai |
| Noeud 5 | Vrai |
| Noeud 6 | vrai |

Le noeud 3 a les noeuds 2, 5 et 6 comme noeuds situés à un « prochain saut ». Initialement, le statut correspondant aux noeuds est mis à faux. Le noeud attend jusqu'à ce qu'il ait reçu tous les paquets SAC de ses noeuds proches saut. S'il n'y pas de problème, les statuts de tous les noeuds dans la table statut sont positionnés à vrai, comme indiqué ci-dessus, et la table DRAM du noeud 3 est mise à jour en mettant à 1 le bit, dans la colonne correspondant au slot ID qui a été demandé, correspondant aux noeuds ID.

Dans l'exemple, le troisième bit dans le champ statut de la colonne correspondant au slot IDs 2, 3, 8, 12, 17,1 9, 24 et 29 est mis à 1.

S'il n'y a pas de problème, voir la figure 13, le noeud 3 envoie un message SAR dans son slot de contrôle $C_3$ et reçoit les messages SAC des noeuds 5, 6 et 2 dans les slots de contrôle $C_5$, $C_6$ et $C_2$.

Si le timer expire, alors le noeud efface toutes les tables et envoie un nouveau message SAR.

Un paquet SAC est reçu avec une adresse de destination qui est différente de celle du noeud: dans ce cas, la table DRAM est remise à jour. Ensuite un test de comparaison est effectué entre les identités des slots que le noeud a requis dans son paquet SAR et ceux du paquet SAC reçu.

S'il n'y a aucun slots commun un nouveau message SAR est envoyé. Sinon, un message de désallocation " Slot Deallocation Requested (SDR)" est envoyé et la procédure est réitérée.

Un message SDR déclare le message SAR précédemment transmis obsolète et invite tous les noeuds qui ont reçu le message SAR à désallouer tous les slots contenus dans ce message

La figure 14 schématise un exemple d'échanges de messages entre le noeud 1 qui envoie un message SAR de façon à allouer le slot 2. Ce message est reçu par les noeuds 4 et 5 qui enverront leurs messages SAC dans le slot de contrôle de $C_4$ et $C_5$. Le noeud 3 étant éloigné du noeud 1 de 3 sauts, il ne reçoit pas ce message et envoie dans $C_3$ son propre message SAR. Dans $C_5$, le noeud 5 envoie un message SAC en utilisant le noeud 1 comme adresse de destination et n'envoie pas de message SAC au noeud 3 car son paquet SAR arrive après celui émis par le noeud 1. Sur réception du message SAC du noeud 5, le noeud 1 voit que l'adresse de destination est le noeud 1 au lieu du noeud 3 et que le noeud 1 a émis une requête pour le slot 2. Puisque le noeud 1 est éloigné de 2 sauts du noeud 3, ils ne peuvent utiliser le même slot. Ainsi, le noeud 3 envoie un message SRD. Les noeuds 2, 5 et 6 mettent à jour chacun leur table DRAM en annulant les précédentes requêtes et envoient un message de confirmation de désallocation de slot (SDC message).

| Slot ID | 2 |
|---|---|
| Status | 0000100100100000 0100 |

| Slot ID | 6 |
|---|---|
| Status | 0000100100100000 0000 |

Après réception de SAR envoyé par le nœud 3

Après réception de DRS envoyé par le nœud 3

Table DRAM entrée des noeuds 2 et 6 après réception des messages SAR et SDR.

Lorsqu'un noeud reçoit un message SAR, il met à jour sa table DRAM et envoie un message SAC en utilisant comme adresse de destination, l'adresse source du paquet SAR reçu. Tant qu'un noeud n'a pas émis de message de confirmation SAC, il ne prend pas en compte les éventuels nouveaux messages SAR.

Pour chaque message SDR, un noeud doit attendre jusqu'à ce que tous les noeuds situés à proximité « prochain(s) saut(s) » aient répondu avec un paquet SDC. Sinon, le message SDR est transmis à nouveau.

Si un slot est utilisé par plus d'une session, son ID n'est pas envoyé dans le message de désallocation.

L'utilisation des slots demandés par un noeud ne sera considérée possible que lorsqu'il aura reçu la confirmation de tous ses voisins directs. L'acceptation de la requête de réservation de ressources est alors prononcée et les slots associés sont effectivement réservés.

**Déclinaison d'une réservation de ressource globale, de type RSVP, au niveau de la couche MAC**

De façon à supporter la requête de réservation de ressource au niveau MAC, deux paramètres sont introduits dans la requête MAC :

- $\tau$ (paramètre MD défini au niveau MAC): délai maximum requis pour accéder au médium radio,
- R (paramètre RB défini au niveau MAC) : débit minimal requis.

Ces deux paramètres sont utilisés dans l'algorithme d'allocation exposé ci-dessus ou dans tout autre type d'algorithme d'allocation, de façon à garantir le respect de la requête de réservation avec garantie de service. Dans le cas d'un TDMA périodique, le message Resv pour la requête de ressource RSVP se traduit dans la couche MAC en termes de paquets réservés MAC.

Les paramètres RSVP sont décrits selon les spécifications RFC de l'IETF connues de l'Homme du métier.

Par exemple, les paramètres utilisés pour décrire l'enveloppe du trafic selon le modèle de sceau à jeton sont (selon la recommandation « token bucket » RFC 2212) :

- p = débit crête (« peak rate ») (octets/sec)
- b = capacité du baquet (« bucket depth ») (octets)
- r = débit du sceau à jeton (« token bucket rate ») (octets/sec)
- m = granularité minimum (« minimum policed unit ») (octets)
- M = taille maximum des paquets de donnée de l'application (« maximum datagram size ») (octets)

Les délais de transmission pour chaque noeud I sont décrits par les deux paramètres suivants :

- $C_i$ = facteur dépendant du débit (« rate dépendent factor ») (octets)
- $D_i$ = terme indépendant du débit (« rate independent term ») (sec)

Ainsi, la borne du délai de transmission d'un paquet à un débit minimal R pour le noeud I est :

$$\tau_i = C_i/R + D_i$$

Dans le cas d'un TDMA avec des slots totalement périodiques au niveau de chaque noeud le procédé de calcul de RSVP peut être utilisé en établissant une correspondance rigoureuse entre les paramètres MAC et les paramètres RSVP. Les relations mathématiques entre les paramètres $C_i$ et $D_i$ du champ AdSpec (du message PATH du protocole RSVP) et des paramètres du niveau MAC décrits précédemment_sont alors les suivantes :

- $C_i$ : taille d'un paquet MAC (en octets)
- $D_i$ : délai additionnel éventuel lié au traitement et au transit interne d'un paquet MAC

Pour des noeuds identiques, les paramètres sont indépendants du noeud et n'ont plus besoin d'être indicés (dans la description C et Ci, sont employés pour désigner un même paramètre ; il en est de même pour D et Di).

Notons que la relation pour le paramètre C n'est rigoureusement valide que si l'algorithme d'entrelacement conduit à une répartition temporelle uniforme des slots physiques de chaque noeud à l'intérieur de la trame globale et si les paquets MAC d'une même session sont répartis sur des slots physiques distincts.

Dans le cas d'un accès périodique à un réseau radio par un noeud (cela signifie que tous les slots TDMA utilisés sont également distribués dans la trame), le délai maximal $\tau$ pour transmettre un paquet pour une session considérée est :

$$\tau = N.K.Ts\ /m + D \qquad (pour\ m \leq K + H)$$

et débit disponible R (pour la session considérée) est :

$$R = m.BR/(K.N.NPS)$$

Avec les paramètres MAC suivants (en partie précédemment définis) :

BR : débit du canal TDMA,

N : nombre de noeuds du réseau,
K : nombre de slots physiques pour un noeud,
H : nombre de slots physiques empruntés par le noeud considéré,
Ts : durée d'un slot physique,
m : nombre de paquets MAC (slots logiques) réservés ($m \leq (K+H).q$),
NPS : nombre de paquets MAC par slot physique,

le délai maximum de transmission du noeud s'écrit donc :

$$D + C/R = \tau + D$$

i.e. :

$$C/R = N.K.Ts /m$$

donc C = BR.Ts /NPS = taille (nombre d'octets) d'un paquet MAC.

D est souvent négligeable, un noeud relais ayant généralement le temps de traiter le paquet pendant le temps d'attente du slot.
Le débit consommé au niveau MAC pour l'encapsulation des paquets n'a pas été pris en compte dans un souci de simplification. La prise en compte de cette encapsulation revient à considérer R comme le débit utile pour l'application.
Dans le cas général d'un TDMA avec accès non périodique des noeuds (dû à une répartition des paquets MAC qui n'est généralement pas périodique en raison d'un espace temporel irrégulier des slots):

les valeurs $\tau$ (délai de transmission maximum d'un paquet) et R (débit minimal requis) ne sont pas indépendantes et sont même très liées :

Par exemple, R peut être déduite approximativement du délai maximum $\tau$. Effectivement, en utilisant au moins un paquet MAC tous les $\tau$ secondes, la valeur minimum de R est :

$$Rmin = (N.K.Ts/\tau)(BR/(K.N.NPS)) = Ts.BR/(\tau.NPS)$$

Et plus les paquets MAC sont espacés régulièrement dans le temps, plus R est proche de Rmin.
On peut donc écrire :

$$\tau = \alpha.C/R$$

où : C = BR.Ts /NPS = taille ou capacité (nombre d'octets) d'un paquet MAC
$\alpha$ est un coefficient plus grand que 1, qui est d'autant plus proche de 1 que les slots d'accès à la radio sont régulièrement espacés dans la trame.

Au niveau RSVP, on considère alors les caractéristiques de l'enveloppe du trafic applicatif en accord avec le modèle de sceau à jeton tel que décrit précédemment.

Maintenant, en considérant la latence maximale de bout-en-bout, $\delta$, et en faisant l'hypothèse que le délai maximum de transmission et de débit minimal sont les mêmes pour chaque noeud (noeuds identiques sur le chemin), la relation mathématique suivante est établie :

$$\delta = \frac{(b-M)(p-R)}{R(p-r)} + \frac{M}{R} + n.\tau$$

où n est le nombre de saut du chemin de session cette formule est réécrite sous la forme :

$$\delta = \frac{(b-M)(p-R)}{R(p-r)} + \frac{M}{R} + n.\frac{\alpha.C}{R}$$

la relation usuelle RSVP est :

$$\delta = \frac{(b-M)(p-R)}{R(p-r)} + \frac{M}{R} + \sum_{i=1}^{n}\left(\frac{C_i}{R} + D_i\right)$$

où les paramètres $C_i$ et $D_i$ caractérisent le noeud i
ainsi, le procédé de calcul de RSVP peut toujours être utilisé en définissant les paramètres $C_i$ et $D_i$ de la façon suivante :

$$C_i = C$$

$D_i$ = Délai additionnel éventuel
Effectivement, dans ce cas, la requête Resv basée sur un calcul de débit minimal requis avec la formule usuelle conduisant à la requête de réservation de ressource MAC suivante :

Largeur de bande requise : R'
Latence maximum demandée : C/R'

et le délai maximum $\tau$ et le débit minimal disponible R satisfont alors les relations suivantes :

$$\tau \leq C/R'$$

$$R \geq R'$$

d'où :

$$\frac{(b-M)(p-R)}{R(p-r)} + \frac{M}{R} + n.\tau \leq \frac{(b-M)(p-R')}{R'(p-r)} + \frac{M}{R'} + n.\frac{C}{R'} = \delta$$

ce qui garantit la latence bout-à-bout demandée.
La requête RSVP peut alors être déclinée à la couche MAC :

- Délai de transmission maximal requis : $\tau$ = C/R',
- Débit minimal requis : R = r.

Si la réservation de ressource est uniquement due à la contrainte de latence bout-en-bout (R' > r), la requête de la couche MAC est basée sur le délai de transmission maximum requis C/R' (la contrainte sur le débit sera alors automatiquement satisfaite).

A l'opposé, si la réservation de ressource est due uniquement à la contrainte de débit (R'=r) et si la contrainte bout-en-bout n'est pas significative, la requête MAC est uniquement basée sur le débit requis r (débit nominal des données de l'application).

La figure 15 représente un automate à états finis pour le processus de négociation des slots dans le procédé d'allocation dynamique.

1 - Statut : Attente

C'est l'état de veille en attente d'une nouvelle requête de réservation de ressource.

événements possibles :

a) ouverture d'une requête de session ; le niveau MAC doit ouvrir la session avec les paramètres suivants :

- ID session ;
- Débit moyen de la session ;
- Délai maximum ;
- Taille maximum des paquets ;

Règle d'un noeud (source, destination, relais, destination et relais) ; Priorité.

b) RX SAR OU SDC DE X : le système reçoit une requête d'allocation/désallocation de slot du noeud 'X'. Le système transmet respectivement SAC ou SDC.

c) RX SAC ou SDC : le système reçoit une confirmation d'une allocation/désallocation d'un slot éloigné d'un saut. Le système met à jour la table DRAM.

d) Requête de clôture de session ; le système ferme la session.

2 - Statut : C1

dans cet état, le noeud analyse les ressources courantes de transmission afin d'établir si les contraintes relatives à une requête de session sont compatibles avec les slots disponibles.

Evénements :

a) TX SAR : le noeud doit allouer de nouveaux slots et démarrer le mécanisme d'allocation ;

b) OK : aucun slot n'est alloué. Les ressources sont déjà assignées pour d'autres sessions mais peuvent être réutilisées.

c) Aucune ressource n'est disponible ; les ressources disponibles ne sont pas suffisantes pour satisfaire la requête de session. Le système analyse la priorité des sessions existantes afin de contrôler si les slots qui sont alloués peuvent être réutilisés.

3 - statut S3 : attente pour transmettre SAR dans son slot

le noeud attend pour transmettre son paquet SAR dans son slot de contrôle.

Evénement :

a) RX A SAC OU SDC : si le noeud reçoit un message SAC ou un message SDC, il doit mettre à jour sa table DRAM et démarrer l'algorithme d'allocation à nouveau de façon à mettre à jour l'algorithme d'allocation de slots avec les nouvelles informations.

b) RX A SAR OU SDC DE X : si le noeud reçoit un message SAR ou SDR, il doit transmettre les messages relatifs SAC ou SDC. Ensuite il doit démarrer la procédure d'allocation à nouveau de façon à mettre à jour l'algorithme d'allocation avec les nouvelles informations.

c) TX : le noeud transmet le message SAR dans son slot de contrôle.

4 - statut S2: il attend pour transmettre SAC ou SDC dans son slot de contrôle

le noeud doit répondre avec un message SAC ou SDC dans son slot de contrôle.

Evénements :

a) il reçoit SAC ou SDC et met à jour la table DRAM : si le noeud reçoit un message SAC ou SDC, il doit seulement mettre à jour la table DRAM,

b) Tx et mise à jour de la table DRAM : le système transmet un message SAC/SDC dans son slot de contrôle,

c) RX DRAM : si le noeud reçoit un message SDR il doit analyser la source du message afin de réaliser si le SDR a été envoyé par le noeud qui a transmis le SAR. Sinon les messages SAR ou SDR sont détruits.

5 - statut C5: il teste la source de SDR

dans cet état, le noeud doit tester l'origine du SDR reçu, nommé SSDR, de façon à le comparer avec l'origine du SAR reçu, nommé SSAR. Si SSDR et SSAR sont égaux, le système transmet un paquet SDC à l'origine du message SAR. Sinon aucune opération n'est faite.

Evénements

    a) aucune opération ; SSAR et SSDR ne sont pas égaux ;
    b) RX SDC FROM X : SSAR et SSDR sont égaux.

6 - Statut C3 : il teste la priorité

Les slots libres ne sont pas en nombre suffisants pour satisfaire à la requête de réservation de ressource. Le noeud compare la priorité de la nouvelle session avec les priorités des sessions courantes de façon à fermer les sessions qui ont un niveau de priorité moins élevé.

Evénements :

    a) rejet ; le test donne une réponse négative pour l'une de ces raisons :

        o il n'y a pas de sessions en cours,
        o les sessions en cours ont un niveau de priorité plus élevé que celle de la session de départ,
        o la somme des slots utilisés et des slots libres avec un niveau de priorité faible n'est pas suffisante pour satisfaire la requête.

    b) OK avec préemption de session ; le noeud doit préempter des sessions de façon à désallouer des slots qui seront utilisés pour la nouvelle session prioritaire ;
    c) Il alloue et/ou désalloue plusieurs slots; les slots désalloués ne sont pas suffisants pour exécuter la session de démarrage et le système doit démarrer le mécanisme d'allocation/désallocation.

7 - statut C4 : il contrôle la table DRAM

Le noeud ayant stoppé les sessions, il contrôle la table DRAM de façon à établir s'il y a nécessité de désallouer de nouveaux slots ou de désallouer des noeuds non utilisés ou bien les deux.

Evènements :

    a) il doit allouer de nouveau slots : cette condition n'est pas vérifiée si le noeud doit désallouer des slots non utilisés. Après désallocations de slots non utilisés, le noeud peut allouer de nouveaux slots ;
    b) il ne doit pas nécessairement désallouer des slots.

8 - Statut C5 : il teste la source de SDR

Dans cet état, le noeud doit tester l'origine de SDR reçu, nommé SSDR, afin de le comparer avec l'origine du SAR reçu, nommé SSAR. Si SSDR et SSAR sont égaux, le noeud doit transmettre un paquet de l'origine du message SAR. Sinon aucune opération est faite.

Evénements :

    a) aucune opération : SSAR et SSDR ne sont pas égaux,
    b) RX SDC DE X : SSAR et SSDR sont égaux.

9 - Statut S4

idem statut S2

10 -statut S5 : il reçoit un message SAC

Le noeud doit transmettre le message SAR de façon à requérir les slots nécessaires et ensuite il attend le message de confirmation (SAC) relatif au message SAR transmis.

Evénements :

    a) il reçoit un SAC/SDC adressé à un autre noeud : si le noeud reçoit un message adressé à un autre noeud, le noeud démarre la transmission d'un paquet SAR à nouveau car plusieurs voisins pourraient ne pas l'avoir reçu,
    b) il reçoit le dernier SAC : le noeud a reçu les messages SAC provenant de tous ses voisins,
    c) RX SAC : le noeud a reçu le message SAC relatif au message SAR transmis, mais tous les voisins n'ont pas transmis le leur,
    d) Le RMT (timer) a expiré ; le RMT a expiré et tous les voisins n'ont pas transmis le message SAC. Le message SAR doit être retransmis.

11- statut C6 : il contrôle SAC/SDC

Le noeud analyse le champ ID slot du message reçu afin de contrôler si le jeu de slots IDs portés dans ce paquet respecte le jeu de IDs que le noeud a choisi.

Evénements :

a) TX SAR nouveau ; la nouvelle information dans le message SAC/SDC reçu ne vérifie pas le jeu de slot requis et le noeud peut transmettre à nouveau le message SAR,

b) Il doit désallouer des ressources : l'information nouvelle dans le message reçu SAC/SDC vérifie le jeu des slots requis. Le noeud doit désallouer les slots requis par les SAR précédemment transmis et ensuite il doit détecter les slots nécessaires pour la session requise.

12 - statut C7 : il teste la requête

lorsque le noeud reçoit une requête de clôture de session, il doit désallouer les slots relatifs seulement s'ils ne sont pas utilisés par d'autres sessions.

Evénements :

a) tous les slots sont encore utilisés, l'algorithme de désallocation n'est pas nécessaire,

b) le noeud génère le message SDR.

13 - statut S6 : il attend pour transmettre SAC ou SDC dans son slot idem statut S2.

14 - statut C2 : il teste la source de SDR

Dans cet état le noeud doit tester l'origine d'un SDR reçu, nommé_SSDR, de façon à le comparer avec l'origine du SAR reçu, nommé SSAR. Si le SSDR et SSAR sont égaux, le noeud doit transmettre un paquet SDC à l'émetteur du message SAR. Sinon aucune opération ne doit être faite.

Evénements :

a) aucune opération : SSAR et SSDR ne sont pas égaux,

b) RX SDC de X : SSAR et SSDR sont égaux.

15 - statut S7 : il attend pour transmettre SDR dans son slot

Le noeud attend pour transmettre un message SDR dans son propre slot de contrôle.

Evénements :

a) RX A SAC/SDC : si le noeud reçoit un message SAC ou SDC, il doit mettre à jour la table DRAM,

b) RX A SAR/SDC de X : si le noeud reçoit un message SAR ou SDR, il doit transmettre les messages SAC ou SDC et ensuite il retourne dans son état,

c) TX : le noeud transmet le message SDR dans sont propre slot de contrôle.

16 - statut S8 : il attend pour recevoir un message SDC

le noeud doit transmettre le message SDR de façon à désallouer des slots non nécessaires et ensuite il doit recevoir le message de confirmation (SDC) relatif au message transmis SDR.

Evénements :

a) il reçoit le message SAC ou SDR adressé à un autre noeud : si le noeud reçoit un message SAC/SDC adressé à un autre noeud, le noeud doit renouveler la transmission de SDR, car tout noeud voisin ne l'a pas reçu,

b) il reçoit les derniers SDC : le noeud a reçu les messages SDC de tous les noeuds voisins,

c) RX SDC : le noeud a reçu le message SDC relatif au message SDR transmis, mais certains noeuds voisins n'ont pas transmis leur message SDC,

d) Le RMT (timer) a expiré ; le RMT a expiré et certains des noeuds voisins n'ont pas transmis le message SDC. Il est nécessaire de retransmettre le message SDR.

**Revendications**

1. Procédé de réservation de ressource avec garantie de service en débit et délai pour des N noeuds d'un réseau radio, chaque noeud comportant un processeur et des moyens radio émetteur/récepteur adaptés pour émettre vers d'autres noeuds radio et recevoir des messages provenant d'autres noeuds radio, le réseau radio utilisant des créneaux temporels pour émettre et transmettre des données, chacun des noeuds du réseau radio exécutant au moins les étapes suivantes :

Mémoriser l'information relative à des noeuds voisins qui sont placés à un ou deux sauts, l'information comprenant l'allocation des slots des noeuds voisins,

Recevoir une requête de réservation de ressources au niveau d'une couche de contrôle d'accès MAC du réseau radio, la requête de réservation de ressources indiquant au moins un délai maximum requis pour accéder au milieu radio correspondant à un délai maximum entre deux slots alloués à une même session pour satisfaire la garantie de latence et la garantie de jitter, et un débit minimum correspondant au nombre minimum de slots requis pour satisfaire la garantie de débit,

Calculer un nombre total minimum de slots requis pour une session en fonction de la contrainte de débit imposée par la requête de réservation de ressources,

Calculer un délai maximum entre deux slots consécutifs alloués à une même session en fonction des contraintes de latence et de jitter imposées par la requête de réservation de ressources,

Calculer les identités des slots dans une trame qui satisfont à la requête de réservation de ressources,

Si les slots identifiés comprennent des slots non alloués au noeud, alors transmettre un message de requête d'allocation de slot SAR afin de négocier l'allocation des slots identifiés,

**Caractérisé en ce que** :

les slots négociés comportent l'utilisation d'un message SAR pour initier une requête d'allocation de slot, un message de confirmation d'allocation de slot SAC pour accuser réception d'un message SAR reçu d'un noeud voisin, un message de déallocation d'un slot pour initier une requête de déallocation de slots alloués précédemment, et un message de confirmation de déallocation d'un slot SDC pour accuser réception d'un message reçu d'un noeud voisin, et caractérisé en **en ce que** le procédé comporte :

En réponse à la réception d'un message SAC répondant à un message SAR, une mise à jour de l'allocation de slots dans l'information mémorisée en accord avec les slots identifiés pour la requête de réservation de ressource,

En réponse à un message SAR, la transmission d'un message correspondant SAC et la mise à jour de l'allocation des slots dans l'information mémorisée en accord avec le message SAR reçu,

En réponse à un message SAC reçu qui ne répond pas à un message SAR, la mise à jour de l'allocation de slots dans l'information mémorisée en fonction des slots indiqués dans le message SAC reçu,

En réponse à un message SDR, la transmission d'un message correspondant et la mise à jour de l'allocation des slots dans l'information mémorisée en fonction du message reçu SDR,

En réponse à un message SDC qui ne répond pas à un message transmis SDR, la mise à jour de l'allocation des slots mémorisés dans l'information mémorisée en fonction des slots indiqués dans le message reçu SDC.

2. Procédé selon la revendication 1 **caractérisé en ce qu'**il comporte au moins une étape de mise en commun de K slots temporels de chacun des N trames dans une réserve de slots de session, N étant le nombre de noeuds dans le réseau radio, l'information mémorisée concerne au moins une partie de la réserve des slots de session.

3. Procédé de réservation selon la revendication 2, **caractérisé en ce que** chaque noeud comprend un dispositif de mécanisme d'allocation de ressource DRAM contenant une table configurée pour stocker :

Un identifiant des types de slots formant une trame de base,
un numéro ID identifiant un slot,
un statut de chaque noeud du réseau, et
une table de visibilité mémorisant un identifiant des noeuds voisins en visibilité radio et un identifiant des noeuds accessibles en deux sauts.

4. Procédé selon la revendication 3, **caractérisé en ce que** l'ensemble des slots de sessions non réservés, à la connaissance du noeud considéré, forme un pool de ressource de slots libres dans lequel le noeud peut puiser en cas de besoin de ressource pour satisfaire une requête de réservation.

5. Procédé selon la revendication 4, **caractérisé en ce qu'**il comporte une étape de réservation de slots comprenant les étapes suivantes :

o déterminer les slots de session nécessaires pour démarrer une session pour satisfaire une requête de réservation de ressources, en tenant compte du débit requis pour un service, du délai maximum pour accéder au milieu radio et de la taille des paquets maximum,

o consulter la table DRAM et la table de visibilité pour déterminer les identifiants des slots de session pour l'allocation de la session,

o implémenter un algorithme prédéterminé pour sélectionner des slots appartenant au pool de slots de session libres pour la requête en réservation de ressource.

6. Procédé selon la revendication 5, **caractérisé en ce qu'**il comporte une étape de négociation d'une configuration de réservation avec les noeuds voisins comprenant les étapes suivantes :

o choisir un ensemble de slots dans le pool de slots libres de session mis en commun,

o transmettre un message SAR vers les autres noeuds voisins,

o générer une table contenant les voisins à deux sauts, et un champ statut renseigné en fonction du message SAC diffusé par ses noeuds voisins en réponse au message transmis SAR,

∘ initialiser un compteur temporel pour déterminer si un message SAC a été perdu.

7. Procédé selon la revendication 6, **caractérisé en ce qu'**il met en oeuvre un mécanisme local de préemption en fonction de la priorité allouée à une session.

8. Procédé selon l'une des revendications précédentes, **caractérisé en ce qu'**il comporte une étape préalable d'entrelacement des slots de chacun des noeuds N du réseau.

9. Procédé selon les revendications 3, 5 et 6, **caractérisé en ce qu'**il comporte une étape de réutilisation spatiale des créneaux temporels en évitant les collisions.

10. Procédé selon l'une des revendications 1 à 7 **caractérisé en ce que** la requête de réservation de ressource est initiée selon un protocole de réservation RSVP.

11. Procédé selon la revendication 6 **caractérisé en ce qu'**il comporte une étape de transmission de messages SDR et de messages SDC s'il y a compétition pour des slots de session indiqués dans un message SAR.

**Patentansprüche**

1. Verfahren zum Reservieren von Ressourcen mit Durchsatz- und Verzögerungsdienstegarantie für N Knoten eines Funknetzes, wobei jeder Knoten einen Prozessor und Funksende-/-empfangsmittel zum Emittieren von Nachrichten zu anderen Funkknoten und zum Empfangen von von anderen Funkknoten kommenden Nachrichten umfasst, wobei das Funknetz Zeitschlitze zum Emittieren und Senden von Daten benutzt, wobei jeder der Knoten des Funknetzes wenigstens die folgenden Schritte ausführt:

- Speichern von Informationen über Nachbarknoten, die sich ein oder zwei Sprünge weit entfernt befinden, wobei die Informationen die Zuordnung der Schlitze der Nachbarknoten beinhalten;

- Empfangen einer Ressourcenreservierungsanforderung an einer MAC-(Medium Access Control)-Schicht des Funknetzes, wobei die Ressourcenreservierungsanforderung wenigstens eine maximale Verzögerung anzeigt, die zum Zugreifen auf das Funkmedium benötigt wird, entsprechend einer maximalen Verzögerung zwischen zwei einer selben Sitzung zugeordneten Schlitzen, um die Latenzgarantie und die Jitter-Garantie zu erfüllen, und wobei ein minimaler Durchsatz der Mindestanzahl von Schlitzen entspricht, die zum Erfüllen der Durchsatzgarantie benötigt werden;

- Berechnen einer minimalen Gesamtzahl von Schlitzen, die für eine Sitzung benötigt werden, in Abhängigkeit von der durch die Ressourcenreservierungsanforderung auferlegten Durchsatzbeschränkung;

- Berechnen einer maximalen Verzögerung zwischen zwei konsekutiven Schlitzen, die einer selben Sitzung zugeordnet sind, in Abhängigkeit von den durch die Ressourcenreservierungsanforderung auferlegten Latenz- und Jitter-Beschränkungen;

- Berechnen der Identitäten der Schlitze in einem Frame, die die Ressourcenreservierungsanforderung erfüllen;

- Senden, wenn die identifizierten Schlitze dem Knoten nicht zugeordnete Schlitze beinhalten, einer Nachricht, die eine SAR-Schlitzzuordnung anfordert, um die Zuordnung der identifizierten Schlitze zu negoziieren,

**dadurch gekennzeichnet, dass**:

die negoziierten Schlitze die Nutzung der folgenden Nachrichten umfassen: eine SAR-Nachricht zum Einleiten einer Schlitzzuordnungsanforderung, eine SAC-Schlitzzuordnungsbestätigungsnachricht zum Quittieren des Empfangs einer von einem Nachbarknoten empfangenen SAR-Nachricht, eine Nachricht zum Aufheben der Zuordnung eines Schlitzes, um eine Anforderung zur Zuordnungsaufhebung von zuvor zugeordneten Schlitzen einzuleiten, und eine Nachricht zum Bestätigen der Aufhebung der Zuordnung eines SDC-Schlitzes, um den Empfang einer von einem Nachbarknoten empfangenen Nachricht zu quittieren, und **dadurch gekennzeichnet, dass** das Verfahren Folgendes beinhaltet:

- Aktualisieren, als Reaktion auf den Empfang einer SAC-Nachricht als Antwort auf eine SAR-Nachricht, der Zuordnung von Schlitzen in den gespeicherten Informationen im Einklang mit den für die Ressourcenreservierungsanforderung identifizierten Schlitzen;
- Senden, als Reaktion auf eine SAR-Nachricht, einer entsprechenden SAC-Nachricht und Aktualisieren der Zuordnung der Schlitze in den gespeicherten Informationen im Einklang mit der empfangenen SAR-Nachricht;
- Aktualisieren, als Reaktion auf eine empfangene SAC-Nachricht, die nicht auf eine SAR-Nachricht antwortet, der Zuordnung von Schlitzen in den gespeicherten Informationen in Abhängigkeit von den in der empfangenen SAC-Nachricht angezeigten Schlitzen;
- Senden, als Reaktion auf eine SDR-Nachricht, einer entsprechenden Nachricht und Aktualisieren der Zuordnung von Schlitzen in den gespeicherten Informationen in Abhängigkeit von der empfangenen SDR-Nachricht;
- Aktualisieren, als Reaktion auf eine SDC-Nachricht, die nicht auf eine gesendete SDR-Nachricht antwortet, der Zuordnung von in den gespeicherten Informationen gespeicherten Schlitzen in Abhängigkeit von den in der empfangenen SDC-Nachricht angezeigten Schlitzen.

2. Verfahren nach Anspruch 1, **dadurch gekennzeichnet, dass** es wenigstens einen Schritt des Abgleichens von K Zeitschlitzen mit jedem der N Frames in einer Reserve von Sitzungsschlitzen beinhaltet, wobei N die Anzahl von Knoten in dem Funknetz ist, wobei sich die gespeicherten Informationen auf wenigstens einen Teil der Reserve der Sitzungsschlitze beziehen.

3. Reservierungsverfahren nach Anspruch 2, **dadurch gekennzeichnet, dass** jeder Knoten eine Vorrichtung mit einem Mechanismus zum Zuordnen von DRAM-Ressourcen umfasst, die eine Tabelle enthalten, die konfiguriert ist zum Speichern:

- eines Identifikators der Typen von Schlitzen, die einen Basisframe bilden;
- einer einen Schlitz identifizierenden ID-Nummer;
- eines Status jedes Knotens des Netzes; und
- einer Sichtbarkeitstabelle, die einen Identifikator der Nachbarknoten in Funksichtbarkeit und einen Identifikator der Knoten speichert, auf die in zwei Sprüngen zugegriffen werden kann.

4. Verfahren nach Anspruch 3, **dadurch gekennzeichnet, dass** der Satz von unreservierten Sitzungsschlitzen, nach Kenntnis des betrachteten Knotens, einen Pool von Ressourcen von freien Schlitzen bilden, von denen der Knoten bei Bedarf Ressourcen abziehen kann, um eine Reservierungsanforderung zu erfüllen.

5. Verfahren nach Anspruch 4, **dadurch gekennzeichnet, dass** es einen Schritt des Reservierens von Schlitzen beinhaltet, die die folgenden Schritte beinhalten:

◦ Bestimmen der zum Starten einer Sitzung benötigten Sitzungsschlitze, um eine Ressourcenreservierungsanforderung zu erfüllen, unter Berücksichtigung des für einen Dienst benötigten Durchsatzes, der maximalen Verzögerung zum Zugreifen auf das Funkmedium und der maximalen Größe der Pakete;
◦ Konsultieren der DRAM-Tabelle und der Sichtbarkeitstabelle, um die Identifikatoren der Sitzungsschlitze zum Zuordnen der Sitzung zu bestimmen;
◦ Implementieren eines vorbestimmten Algorithmus zum Auswählen von Schlitzen, die zum Pool von Sitzungsschlitzen gehören, der für die Ressourcenreservierungsanforderung frei ist.

**6.** Verfahren nach Anspruch 5, **dadurch gekennzeichnet, dass** es einen Schritt des Negoziierens einer Reservierungskonfiguration mit den Nachbarknoten beinhaltet, der die folgenden Schritte beinhaltet:

  ◦ Wählen eines Satzes von Schlitzen aus dem Pool von abgeglichenen freien Sitzungsschlitzen;
  ◦ Senden einer SAR-Nachricht zu den anderen Nachbarknoten;
  ◦ Erzeugen einer Tabelle, die die zwei Sprünge weit entfernten Nachbarn enthält, und ein Statusfeld, das in Abhängigkeit von der SAC-Nachricht ausgefüllt ist, die von seinen Nachbarknoten als Reaktion auf die gesendete SAR-Nachricht rundgesendet wird;
  ◦ Initialisieren eines Zeitzählers zum Bestimmen, ob eine SAC-Nachricht verloren gegangen ist.

**7.** Verfahren nach Anspruch 6, **dadurch gekennzeichnet, dass** es einen lokalen Präemptionsmechanismus in Abhängigkeit von der einer Sitzung zugeordneten Priorität implementiert.

**8.** Verfahren nach einem der vorherigen Ansprüche, **dadurch gekennzeichnet, dass** es einen Vorabschritt des Verflechtens der Schlitze von jedem der Knoten N des Netzwerks umfasst.

**9.** Verfahren nach den Ansprüchen 3, 5 und 6, **dadurch gekennzeichnet, dass** es einen Schritt des räumlichen Wiederverwendens von Zeitschlitzen unter Vermeidung von Kollisionen beinhaltet.

**10.** Verfahren nach einem der Ansprüche 1 bis 7, **dadurch gekennzeichnet, dass** die Ressourcenreservierungsanforderung gemäß einem RSVP-Reservierungsprotokoll eingeleitet wird.

**11.** Verfahren nach Anspruch 6, **dadurch gekennzeichnet, dass** es einen Schritt des Sendens von SDR- und SDC-Nachrichten beinhaltet, wenn es einen Wettbewerb um die in einer SAR-Nachricht angezeigten Sitzungsschlitze gibt.


**Claims**

**1.** A method for reserving resources with a throughput and delay service guarantee for N nodes of a radio network, each node comprising a processor and radio transceiver means adapted to emit to other radio nodes and to receive messages originating from other radio nodes, said radio network using time slots to emit and transmit data, each of the nodes of said radio network executing at least the following steps:

  - storing information relating to neighbouring nodes that are located one or two hops away, said information comprising the allocation of slots of the neighbouring nodes;
  - receiving a resource reservation request at a medium access control MAC layer of said radio network, said resource reservation request indicating at least one maximum delay required to access the radio medium that corresponds to a maximum delay between two slots allocated to the same session in order to meet the latency guarantee and the jitter guarantee, and a minimum throughput corresponding to the minimum number of slots required to meet the throughput guarantee;
  - computing a minimum total number of slots required for a session as a function of the throughput constraint imposed by said resource reservation request;
  - computing a maximum delay between two consecutive slots allocated to the same session as a function of the latency and jitter constraints imposed by said resource reservation request;
  - computing the identities of slots in a frame that fulfil said resource reservation request;
  - transmitting, if the identified slots comprise slots that are not allocated to the node, a message requesting allocation of an SAR slot in order to negotiate the allocation of the identified slots,

  **characterised in that**:

  the negotiated slots comprise the use of an SAR message to initiate a slot allocation request, a message for confirming the SAC slot allocation to acknowledge the receipt of an SAR message received from a neighbouring node, a message for deallocating a slot in order to initiate a request to deallocate previously allocated slots and a message for confirming the deallocation of an SDC slot in order to acknowledge receipt of a message received from a neighbouring node, and **characterised in that** said method comprises:

  - updating, in response to the receipt of an SAC message responding to an SAR message, the allocation of slots in the stored information in accordance with the slots identified for said resource reservation request;

- transmitting, in response to an SAR message, a corresponding SAC message and updating the allocation of the slots in the stored information in accordance with the received SAR message;
- updating, in response to a received SAC message that does not respond to an SAR message, the allocation of slots in the stored information as a function of the slots indicated in the received SAC message;
- transmitting, in response to an SDR message, a corresponding message and updating the allocation of slots in the stored information as a function of the received SDR message;
- updating, in response to an SDC message that does not respond to a transmitted SDR message, the allocation of slots stored in the stored information as a function of the slots indicated in the received SDC message.

2. The method according to claim 1, **characterised in that** it comprises at least one step of matching K time slots with each of the N frames in a reserve of session slots, with N being the number of nodes in the radio network, the stored information relating to at least part of the reserve of the session slots.

3. The reservation method according to claim 2, **characterised in that** each node comprises a device with a mechanism for allocating resources DRAM containing a table that is configured to store:

- an identifier of the types of slots forming a standard frame;
- an ID number identifying a slot;
- a status of each node of said network; and
- a visibility table storing an identifier of the neighbouring nodes within radio visibility and an identifier of the nodes that can be accessed in two hops.

4. The method according to claim 3, **characterised in that** the set of the unreserved session slots, known by the considered node, form a pool of resources of free slots, from which the node can draw resources, where necessary, in order to meet a reservation request.

5. The method according to claim 4, **characterised in that** it comprises a step of reserving slots that comprises the following steps:

◦ determining the session slots needed to start a session in order to meet a resource reservation request, taking into account the throughput required for a service, the maximum delay for accessing the radio medium and the maximum size of the packets;
◦ consulting the DRAM table and the visibility table in order to determine the identifiers of the session slots for allocating the session;
◦ implementing a predetermined algorithm for selecting slots belonging to the pool of session slots that is free for said resource reservation request.

6. The method according to claim 5, **characterised in that** it comprises a step of negotiating a reservation configuration with the neighbouring nodes comprising the following steps:

◦ selecting a set of slots from the pool of matched free session slots;
◦ transmitting an SAR message to the other neighboring nodes;
◦ generating a table containing the neighbours that are two hops away and a status field completed as a function of the SAC message broadcast by its neighbouring nodes in response to the transmitted SAR message;
◦ initialising a time counter in order to determine whether an SAC message has been lost.

7. The method according to claim 6, **characterised in that** it implements a local pre-empting mechanism as a function of the priority allocated to a session.

8. The method according to any one of the preceding claims, **characterised in that** it comprises a prior step of interleaving the slots of each of the nodes N of said network.

9. The method according to claims 3, 5 and 6, **characterised in that** it comprises a step of spatially reusing time slots whilst avoiding collisions.

10. The method according to any one of claims 1 to 7, **characterised in that** said resource reservation request is initiated according to an RSVP reservation protocol.

**11.** The method according to claim 6, **characterised in that** it comprises a step of transmitting SDR and SDC messages if there is competition for the session slots indicated in an SAR message.

Ts

| Cn₀ | Dn₁ | Dn₂ | Dn₃ | · · · · · | Dn_{k-1} |

$T_{BF}$

## FIG.1

$T_{BF}$

| BF₁ | BF₂ | BF₃ | BF₄ | · · · · · | BF_N |

$T_F$

## FIG.2

noeud 1 (K Slots)

noeud N (K Slots)

Données
élastiques
Slots (P)

Slots sessions
(K-1- P)

Données
élastiques
Slots (P)

Slots sessions
(K-1- P)

| CTRL | ED | ... | ED | SES | ... | SES | ... | CTRL | ED | ... | ED | SES | ... | SES |

| SES | ... | SES | SES | ... | SES | | | SES | ... | SES | SES |

Slots sessions allouables (N*(K-1- P))

Slot contrôle

Slot données
élastiques

Slot Session

## FIG.3

| | BF₁ | | | | | | BF₂ | | | | | | BF₃ | | | | | | BF₄ | | | | | |
|---|---|---|---|---|---|---|---|---|---|---|---|---|---|---|---|---|---|---|---|---|---|---|---|---|
| noeud ID | 1 | 1 | 0 | 0 | 0 | 0 | 2 | 2 | 0 | 0 | 0 | 0 | 3 | 3 | 0 | 0 | 0 | 0 | 4 | 4 | 0 | 0 | 0 | 0 |
| Type Slot | 0 | 0 | 1 | 1 | 1 | 1 | 0 | 0 | 1 | 1 | 1 | 1 | 0 | 0 | 1 | 1 | 1 | 1 | 0 | 0 | 1 | 1 | 1 | 1 |
| ID Slot | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

TRAME

Slot Type 0 > ED & CTRL slots
Slot Type 1 > Session Slot

## FIG.4

| noeud ID | 1 | 0 | 0 | 2 | 0 | 0 | 3 | 0 | 0 | 4 | 0 | 0 | 1 | 0 | 0 | 2 | 0 | 0 | 3 | 0 | 0 | 4 | 0 | 0 |
|---|---|---|---|---|---|---|---|---|---|---|---|---|---|---|---|---|---|---|---|---|---|---|---|---|
| Type Slot | 0 | 1 | 1 | 0 | 1 | 1 | 0 | 1 | 1 | 0 | 1 | 1 | 0 | 1 | 1 | 0 | 1 | 1 | 0 | 1 | 1 | 0 | 1 | 1 |
| ID Slot | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

TRAME

Slot Type 0 > ED & CTRL slots
Slot Type 1 > Session Slot

## FIG.5

FIG.7

```
                    ┌──────────────────┐
                    │        N         │
                    │        K         │
                    │       K*N        │
                    │      N S(n)      │
                    │       ED         │
                    └──────────────────┘
                             │
                             ▼
                    ┌──────────────────┐
                    │ TS(1) -> Session │
                    │        ⋮         │
                    │ TS(x) -> Session │
                    │        ⋮         │
                    │ TS(N*K) -> Session│
                    │        x : 1 -> N*K│
                    └──────────────────┘
                             │
                             ▼
              ( t = 1, n =0, step = integer (K/(ED+1)) )
```

```
                    ┌──────────────┐              ┌──────────┐
                    │ TS(t) -> ED; │              │ n = n+1  │
                    │ t = t+step;  │              └──────────┘
                    └──────────────┘                   ▲
                             │                         │
                             ▼                         │
                        ╱ n = N*(ED+1) ╲    NON         │
                        ╲      ?      ╱ ──────────────────┘
                             │ OUI
                             ▼
                      ( nœud =1, x =1 )
```

```
        OUI         ╱ TS(x) -> ED ╲              ┌──────────┐
     ┌──────────────╲      ?      ╱              │ x = x+1  │
     │               │                           └──────────┘
     │               │ NON                            ▲
     ▼               ▼                                │
┌──────────────┐    ╱ x = N*K ╲    NON                │
│ NS(x) ->nœud │    ╲    ?    ╱ ─────────────────────┘
│ nœud = nœud +1;│ ──┘  │
│ Si nœud > N  │       │ OUI
│  nœud = 1;   │       ▼
└──────────────┘    ( FIN )
```

# FIG.6

FIG.8

FIG.9

FIG.10

nœud 1    nœud 2    nœud 3    nœud 4    nœud 5    nœud 6

0 1 2 3 4 5 6 7 8 9 10 11 12 13 14 15 16 17 18 19 20 21 22 23 24 25 26 27 28 29

$T_S$

$T_{BF}$

$T_F$

▨ Slot contrôle    ▥ Slot donnée élastique    ▦ Slot session

∗ Slots occupés    ▦ Slots requis

# FIG.11

## Trame M

nœud 1    nœud 2    nœud 3    nœud 4    nœud 5    nœud 6

0 1 2 3 4 5 6 7 8 9 10 11 12 13 14 15 16 17 18 19 20 21 22 23 24 25 26 27 28 29

SAR        SAC       SAC

## Trame M+1

nœud 1    nœud 2    nœud 3    nœud 4    nœud 5    nœud 6

SAC

# FIG.13

Insuffisance de slots disponibles

Sessions actives? — Non

Oui

Sessions avec priorité inférieure ? — Non

Oui

Oui — Slots désalloués suffisant ? — Non

Mise à jour table DRAM. Envoi message SDR et démarrage de l'algorithme allocation si nécessaire

Slots de session ne peuvent être alloués

# FIG.12

Trame M

| nœud 1 | nœud 2 | nœud 3 | nœud 4 | nœud 5 | nœud 6 |

0 1 2 3 4 5 6 7 8 9 10 11 12 13 14 15 16 17 18 19 20 21 22 23 24 25 26 27 28 29

SAR          SAR          SAC          SAC          SAC
                          pour nœud 1  pour nœud 1  pour nœud 3

Trame M+1

| nœud 1 | nœud 2 | nœud 3 | nœud 4 | nœud 5 | nœud 6 |

SAC          SDR
pour nœud 3

# FIG.14

FIG.15

**RÉFÉRENCES CITÉES DANS LA DESCRIPTION**

**Documents brevets cités dans la description**

- US 2004228353 A
- US 2002093983 A
- WO 2004102989 A
- US 2002196808 A
- US 2006268908 A